**Europäisches Patentamt**

**European Patent Office**

**Office européen des brevets**

(19)

(11) Publication number: **0 035 676**
**A1**

(12) # EUROPEAN PATENT APPLICATION

(21) Application number: **81101232.7**

(22) Date of filing: **20.02.81**

(51) Int. Cl.³: **A 23 L 1/36**

(30) Priority: **27.02.80 US 125142**
**25.04.80 US 143826**

(43) Date of publication of application:
**16.09.81 Bulletin 81/37**

(84) Designated Contracting States:
**AT BE CH DE FR GB IT LI LU NL SE**

(71) Applicant: **Hahn, Linus**

**Aurora Ohio 44202(US)**

(72) Inventor: **Hahn, Linus**

**Aurora Ohio 44202(US)**

(74) Representative: **Wagner, Karl H., Dipl.-Ing.**
**P.O.Box 22 02 46 Gewuerzmuehlstrasse 5**
**D-8000 München 22(DE)**

(54) Improved peanut products and methods for making same.

(57) A method for processing peanuts which includes the steps of: making a mash by grinding a mixture of water and peanuts which have been pretreated to remove tannin, odor and impurities; partially dewatering the mash to form a dough; dividing the dough into pieces; and drying the pieces. The result includes a peanut product of water-soluble pieces of dried, divided, unreconstituted peanut dough prepared from ground, heat-treated, detanninized, skinned peanuts which has sufficient moisture to retain its shape. The resulting product may also be ground into flour.

WATER AND
PRETREATED
PEANUTS

GRINDER — STARCH

TO COOKER

MASH

WATER

DEWATERING
DEVICE

PREDRYER

DOUGH

DIVIDER

STARCH

*FIG.1*

DRYER

PRODUCT

EP 0 035 676 A1

Improved Peanut Products and Methods for Making Same

Background for the Invention

My invention relates to improved peanut products and new
processes for making such products. More specifically, my
invention relates to water-soluble, odorless and tasteless
peanut products and processes for making such products.

Protein is a vital builder of the human body. However, conventional sources of protein such as meat, fish, poultry,
and dairy products are being severely strained by the population explosion. It is well known that peanuts (the term
peanuts as used herein includes equivalent nut meats even
if commonly referred to by different names) are high in
nutritive value, especially in protein.

It is highly desirable to obtain peanut products which are
odorless and tasteless because the impurities and inherent
odor of peanuts are often objectionable in many applications.
In addition, it is also often desirable to have a water-
soluble product. Peanuts, even after they are pulverized,
are not naturally water-soluble and so additional processing
is required to obtain a water-soluble product.

Akihiro Matsunaga invented processes for making peanut flour
which are the subjects of United States Patent Nos.
3,829,589 and 3,901,983. Matsunaga's basic process may be
very briefly summarized as follows: washing blanched,
skinned peanuts in a saline bath; rinsing them; precooking
them; rinsing again; pressure cooking; grinding; and then
spray drying. Naturally, further details and additional
steps are involved and the aforementioned patents should be
consulted if further information is desired. Other examples
of the peanut processing art are to be found in United States Patent Nos. 4,113,889 (Baxley), 4,025,658
(Pominski et al), 3,928,635 (Ohta et al), 3,800,056
(Mitchell), and 617,266 (Watson).

These and other prior processes involved inefficiencies
and problems I sought to avoid. For example, some of these
processes require the use of spray dryers in the final step
of making the flour.Because of the fairly high fat content
of peanuts there is from time to time the threat of serious
fires developing in the spray dryers. In addition, in order
for typical spray dryers to operate properly, the peanut
material fed into them must have a minimum water-to-solid
ratio of about 65-to-35 by weight, and more often higher.
However, the cooking steps preceding the drying steps of,
for example Matsunaga's processes, are more efficiently
conducted with a lower amount of water because one wishes
to cook the peanuts  and not expend energy on heating water
instead. Therefor, in practicing these processes one is
often forced to add water after cooking and prior to spray
drying only to have that water removed during drying, which
seemed to me to be an inefficiency to somehow be avoided.

Although water-soluble, odorless and tasteless peanut
flour may be produced by prior art methods, flour is sometimes an inconvenient form for many applications. For
example, flour and other powdery products are rather unappetizing to eat by themselves. In addition,  flour and
the like are messy to handle when one wishes to use it
directly as an animal feed.

Summary of the Invention

My method of processing peanuts has the advantages of improved energy efficiency and safety. The difficulties inherent in spray drying are avoided. In addition, because of
water recycling, there is less waste of the inherent nutritional value of the peanuts.

Peanut products of my invention include products in appetizing and convenient forms. In addition, they enjoy long shelf lives.

My method of processing peanuts features the making of a mash by grinding a mixture of water and peanuts which have been pretreated to remove tannin, odor and impurities, the partial dewatering of the mash to form a dough, the dividing of the dough into pieces, and the drying of the pieces. Preferably, water removed during the partial dewatering step is recycled for use in the pretreating of peanuts. The partial dewatering step yields a dough with sufficient moisture such that the product can retain its shape after the dividing and drying steps are completed. Provision is made for the addition of starch at different points in the process in order to obtain a product with improved shelf life, and also for the removal of peanut oil in order to obtain a product with reduced fat content. Color of the product is controlled during the drying step as well as during blanching of peanuts. The product of the process can be further ground into flour.

The product of my invention includes a water-soluble peanut product in the form of nonpowdery pieces which contain enough water to hold their shapes. This product is made from unreconstituted peanut dough, that is, it is made from peanuts which have never been reduced to a flour-like form.

Brief Description of the Drawings

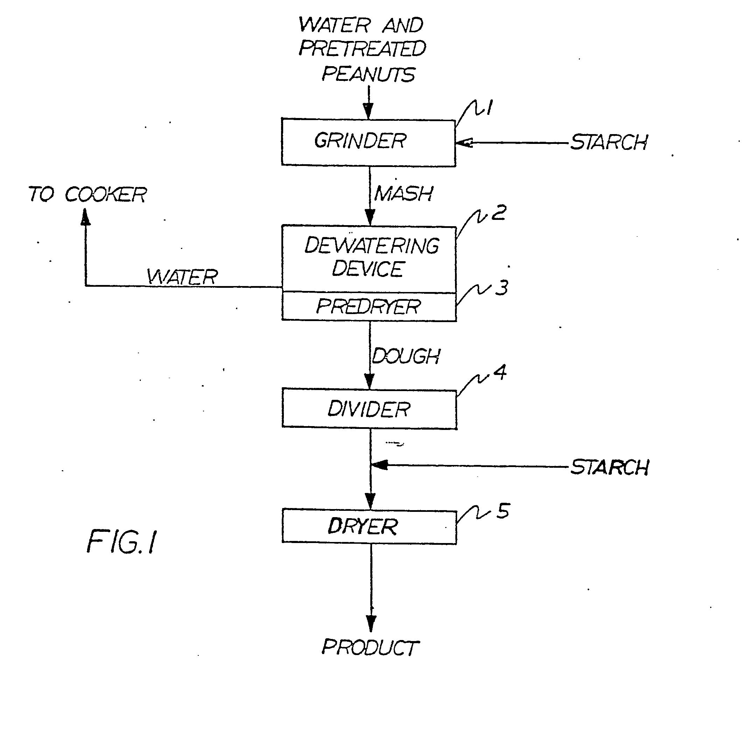

Figure 1 is a block diagram showing a preferred embodiment of the process according to my invention.

Description of the Preferred Embodiments

The initial steps of the process according to my invention are preferably similar to the initial steps of Matsunaga's

method of making peanut flour described in United States
Patent No. 3,829,589, which is incorporated herein by reference. Preferably the initial steps of my process are as
follows: gently parching shelled peanuts at a temperature
of 50°C to 90°C for 3 to 6 minutes and then removing the
skins; soaking the skinned peanuts in a saline solution for
approximately 30 seconds to 5 minutes at a temperature of
about 20°C to 50°C; preheating the peanuts in water at a
temperature of about 70°C to 100°C for 1 to 5 minutes;
washing the peanuts in water; and then pressure cooking in
water at a temperature of about 120°C for 15 to 30 minutes.
It will be noted that the preheating time of 1 to 5 minutes
according to my invention is substantially less than the
15 to 45 minutes suggested in the aforementioned patent to
Matsunaga. After these initial steps one has a mixture of
water and pretreated peanuts. For convenience, peanuts which
have gone through all these (or equivalent) steps are hereinafter referred to as pretreated peanuts. The purpose of
this pretreatment is to remove tannin, odor and other impurities. Peanuts which have gone through the first two
steps (that is, the parching and saline soaking steps) are
for convenience referred to as partially preprocessed peanuts.

It should be appreciated that although in its preferred embodiments my invention involves peanuts which have been pretreated as already described, my invention includes the use
of pretreated peanuts which have been pretreated by any
other method which substantially removes the tannin, odor,
and impurities of the peanuts. Furthermore, the pretreated
peanuts must be mixed with water in order that the material
eventually be at the level of moisture specified below for
the peanut dough. During pressure cooking a large amount of
water, typically at least about one to one and one-half
times as much water as peanuts by weight, is used and most
of this water is absorbed by the peanuts. In addition,
efficient operat on of a grinder generally requires an even greater amount of water than is necessary for the peanut
dough.

From this point on my process differs substantially from
Matsunaga's process. In Matsunaga's process the mixture of
water and pretreated peanuts is compressed and pulverized
to micronized form so as to be able to pass through a 300
mesh screen. In my process the mixture of water and pretreated peanuts is then ground to form a mash; however,
particles of the mash need not be, although they may be,
so small as to pass through a 300 mesh screen.

Referring now to Figure 1, the process according to my invention proceeds by feeding the mixture of water and pretreated peanuts into a grinder 1 where the mixture is ground
into a mash. Additional water may be added during the
grinding step in order to facilitate the grinding and also
to raise the moisture level of the resulting mash. Optionnal-
ly, one may add high-grade starch, such as corn starch or
potato starch, during this grinding step. The purpose of the
added starch is to lengthen the shelf life of the final
product.

The mash is removed from the grinder 1 and sent to a dewatering device 2 where the mash is turned into a dough.
This dewatering device may consist of a mechanical device
such as a centrifugal machine or, less preferably, a simple
mechanical press. Optionally, the mash is sent to a predryer 3 after the dewatering device 2. This predryer may
consist of any suitable form of heating device such as an
oven. One also has the option of not using any mechanical
dewatering device at all, and instead only using a heat-
type dryer. No matter what sort of dewatering device or
dryer is used during this partial dewatering step, the
object is to turn the mash which contains too much water
into a dough which can retain its shape after subsequent
dividing and drying steps described below. The preferred water content of the dough at the end of this partial dewatering step is in the range of about 20-50% water by
weight and more preferably in the range of about 25-35%. If
the water content is much too high, the dough will be runny
and will not form into pieces. If the water content is somewhat too high, the pieces made during the subsequent dividing step will stick to each other while drying.

Optionally, the water removed during the partial dewatering
step is recycled back to a pressure cooker for use in the
earlier pretreating steps for subsequent peanuts. This
water is useful because of its high protein content. It can
be appreciated that at least part of the partial dewatering
step preferably be done by mechanical means because it is
easy to reclaim the high protein water from a mechanical
dewaterer, whereas a condenser or other additional devices
would be required to recover the water removed by a heating
type of drying device.

The dough made during the partial dewatering step is next
fed into a divider 4 where the step of dividing the dough
into pieces takes place. It should be understood that the
dividing step may be effected by an assortment of means,
including various extrusion devices. One device suitable
for this dividing step is a granulator having a pair of
opposing rollers. One roller has a smooth surface. The other
roller has a series of grooves. Preferably, the rollers are
in contact with each other. The peanut mash having a proper
water content passes between these two rollers where it is
divided into a series of strands. These strands fall onto a
moving conveyor belt, breaking into small irregular pieces
in the process. Optionally, the rollers of the granulator
itself are heated so as to raise the temperature of the
dough to a temperature in the range of preferably about 65$^{\circ}$
to 120$^{\circ}$C during the dividing step. This helps to speed up
the drying of the pieces of dough.

After the grinding step and before the dividing (that is,
before, during or after the partial dewatering step, preferably, just before dewatering) one has the option of removing some or substantially all of the peanut oil. This can
be accomplished, for example, by using centrifugal separating techniques, which are preferable to techniques which involve mechanically squeezing the oil out. One utilizes this
additional deoiling step in order to obtain a low or no fat
final product. It also yields peanut oil as an additional
product of the process. The dough made with such lesser
amounts of peanut oil preferably has a somewhat higher water
content than dough that has not been deoiled, all other
conditions remaining essentially the same.

After the dividing step one once again has the option of
adding high-grade or other types of starch to the pieces of
dough. For example, the pieces may be covered with a thin
shell of starch. As stated earlier, this added starch helps
to lengthen the shelf life of the final product.

The pieces of dough are then sent to a dryer 5. Preferably,
the dryer is an oven in which the pieces of dough are
carried through a predetermined temperature range in which
the initial temperatures are higher than the terminal temperatures. Most preferably the initial temperature is about
150$^{\circ}$C and the final temperature of the oven is about 50$^{\circ}$C.
The time spent in the oven during this drying step is preferably in the range of about 1 to 3 minutes depending on
the temperature range and speed of the dryer. For example,
the dryer may comprise an oven containing a conveyor belt
which carries the pieces of dough past a series of radiant
heaters. The intitial radiant heaters are at a higher thermo-
intensity than the later ones. The temperature range is controlled by varying the intensity of the heating elements,
the speed of the conveyor, and the length of the oven. By
varying the temperature in the oven and the time spent in the oven, the color of the final product may be varied from between a creamy white to a dark brown depending on the final application desired.

The dividing and drying steps can take place in the same device. For example, the strands of divided peanut dough can fall directly into a rotary type dryer or a fluid bed type dryer rather than be carried from the divider to the dryer.

The product of the foregoing process is water-soluble, odorless and tasteless. Preferably the water content of the final product is in the range of about 3% to 6% by weight. Preferably, the final product contains about 5-10% starch by weight, although the added starch is not always necessary.

The final product is not in a form of a flour or powder, rather in much larger pieces. The size of the pieces may be varied from rather small granules to larger irregularly (or regularly) shaped pellets. The pieces do not fall apart because they contain a sufficient amount of water to maintain their shape, in other words; the pieces have a shape-sustaining effective amount of water. Thus, they are more appetizing for consumption because they can be chewed, whereas trying to eat dust-like substances like flour is unappetizing. In addition, pellet-like forms of the product are especially useful in animal feed or additions to animal feed because they can be more easily handled than powdery forms of products.

It should be further appreciated that the product obtained from the final drying step in my process is made from unreconstituted peanut dough. By unreconstituted I mean th. the dough is not formed by first turning the peanuts into flour and then adding water. Instead, the need of making flour is entirely avoided. Indeed, it has been my experience that a product made from reconstituted peanut dough (that is, dough made by mixing peanut flour and water) can have an unpleasant flavor which makes it undesirable for
human consumption.

If one desires a flour-like consistency in the final
product, the pieces obtained from the final drying step can
be further ground into finer granules or even into powder.
It should be appreciated that even where the final product
desired is a flour-like substance, the method according to
my invention is superior to prior art processes. For
example, water need not be added prior to the drying step
in order to operate spray dryers. In addition, the fire
hazard during the handling is substantially reduced. Furthermore, some or all of the water removed during the partial
dewatering step of my invention may be recycled for use in
the earlier cooking step. Thus the high protein content of
this water is not wasted.

The invention may be summarized as follows:

1. In a method for processing a mixture of water and
peanuts which have been pretreated to remove
tannin, odor, and impurities, the steps comprising:
    grinding said mixutre of pretreated peanuts and water
to form a mash;
    partially dewatering said mash to make nonrunny dough;
    dividing said dough into pieces; and
    drying said pieces yet leaving a shape-sustaining
effective amount of water.

2. In a method for processing skinned peanuts which have
been parti_ally preprocessed by saline soaking and rinsing,
the steps comprising:
    cooking said partially preprocessed peanuts in heated
water to make a mixture of water and pretreated peanuts;

grinding said mixture to form a mash;

partially dewatering said mash by removing water to make a nonrunny dough;

using in said cooking step the water removed from said mash during said partial dewatering step;

dividing said dough into pieces; and

drying said pieces.

3. In a method for processing skinned peanuts, the steps comprising:

soaking the skinned peanuts in a saline solution;

preheating the saline soaked peanuts in water at a temperature of about 70°C to 100°C for about 1 to 5 minutes;

rinsing the preheated peanuts in water;

pressure cooking the rinsed peanuts in water at a temperature of about 120°C for 15 to 30 minutes;

grinding the pressure cooked peanuts to form a mash;

partially dewatering said mash to make a nonrunny dough;

dividing said dough into pieces; and

drying said pieces.

4. The process of points 1, 2 , 3, 24, 25, 26, or 27, wherein said partial dewatering step comprises removing sufficient water from said mash to make a dough having approximately 20% to 50% water by weight.

5. The process of point 4, further comprising the step of adding starch to said pieces prior to said drying step.

6. The process of point 4, further comprising adding starch during said grinding step.

7. The process of point 4, wherein said partial dewatering step comprises removing sufficient water from said mash to make a dough having approximately 25% to 35% water by weight.

8. The process of point 4, further comprising the step of removing peanut oil prior to said dividing step.

9. The process of point 4, wherein said partial dewatering step comprises mechanically removing the water.

10. The process of point 4, wherein said partial dewatering step comprises predrying by means of heat.

11. The process of point 4, wherein said partial dewatering step comprises mechanically removing the water and then predrying by means of heat.

12. The process of point 4, further including the step of heating said dough during said dividing step.

13. The process of point 4, wherein said dividing step comprises heating said dough to a temperature in the range of about $65^{\circ}C$ to $120^{\circ}C$.

14. The process of point 4, further comprising the step of grinding said dried pieces into flour.

15. The peanut product made according to the process of points 1, 2, 3, 24, 25, 26, or 27.

16. The peanut product made according to the process of point 4.

17. The peanut product made according to the process of point 5.

18. The peanut product made according to the process of point 6.

19. The peanut product made according to the process of point 7.

20. The peanut product made according to the process of point 8.

21. A pea...t product comprising: water-soluble pieces of dried, divided, unreconstituted peanut dough prepared from ground, heat-treated, detanninized, skinned peanuts and having a shape-sustaining effective amount of water.

22. The product of point 21, wherein said pieces are odorless and tasteless and have a water content in the range of about 3% to 6% by weight.

23. The product of points 21 or 22, wherein said pieces further comprise about 5% to 10% high grade starch by weight.

24. The process of point 2, wherein said drying step leaves a shape-sustaining effective amount of water in said pieces.

25. The process of point 3, wherein said drying step leaves a shape-sustaining effective amount of water in said pieces.

26. The process of point 3, further comprising using in said cooking step the water removed from said mash during said partial dewatering step.

27. The process of point 25, further comprising using in said cooking step the water removed from said mash during said partial dewatering step.

28. The process of point 4, wherein said drying step comprises reducing the water content of said pieces to the range of about 3% to 6% by weight.

29. The peanut product made according to the process of point 28.

30. In a method for processing a mixture of water and peanuts which have been pretreated to remove tannin, odor, and impurities, the steps comprising:
   grinding said mixture of water and pretreated peanuts to form a mash;
   partially dewatering said mash to make a nonrunny dough;
   dividing said dough into pieces;
   drying said pieces; and
   grinding said dried pieces into flour.

31. The process of point 30, wherein said partial dewatering step comprises removing sufficient water from said mash to make a dough having approximately 20% to 50% water by weight.

32. The process of point 31, wherein said partial dewatering step comprises removing sufficient water from said mash to make a dough having approximately 25% to 35% water by weight.

33. The peanut product made according to the method for processing skinned peanuts which have been partially preprocessed by saline soaking and rinsing, comprising the steps of:
   cooking said partially preprocessed peanuts in heated water to make a mixture of water and pretreated peanuts;

grinding said mixture to form a mash;

partially dewatering said mash by removing water to make a nonrunny dough;

using in said cooking step the water removed from said mash during said partial dewatering step;

dividing said dough into pieces;

drying said pieces; and

grinding said dried pieces into flour.

34. The peanut product of point 33, wherein said partial dewatering step comprises removing sufficient water from said mash to make a dough having approximately 20% to 50% water by weight.

35. The peanut product of point 34, wherein said partial dewatering step comprises removing sufficient water from said mash to make a dough having approximately 25% to 35% water by weight.

Although the foregoing describes several preferred embodiments of the present invention, it should be understood that the invention may be practiced in still other forms and in the scope of the following claims.

0035676

- 15 -

1.    In a method for processing the mixture of water and
peanuts which have been pretreated to remove tannin, odor, and
impurities, the steps comprising:

grinding said mixture of pretreated peanuts and water
to form a mash;

partially dewatering said mash to make a dough;

dividing said dough into pieces; and

treating said pieces to yield a product of predetermined physical characteristics.

2.    The process according to claim 1 wherein said step of
treating said pieces comprises drying said pieces yet leaving a
shape-sustaining effective amount of water.

3.    In a method for processing skinned peanuts which have
been partially preprocessed by saline soaking and rinsing, the
steps comprising:

cooking said partially preprocessed peanuts in heated
water to make a mixture of water and pretreated peanuts;

grinding said mixture to form a mash;

partially dewatering said mash by removing water to
make a nonrunny dough;

using in said cooking step the water removed from said
mash during said partial dewatering step;

dividing said dough into pieces; and

drying said pieces.

4.      In a method for processing peanuts, the steps comprising:

soaking the skinned peanuts in a saline solution;

preheating the saline soaked peanuts in water at a temperature of about 70°C. to 100°C. for about 1 to 5 minutes;

rinsing the preheated peanuts in water;

pressure cooking the rinsed peanuts in water at a temperature of about 120°C. for 15 to 30 minutes;

grinding the pressure cooked peanuts to form a mash;

partially dewatering said mash to make a nonrunny dough;

dividing said dough into pieces; and drying said pieces.

5.      The invention of claims 1, 2, 3 or 4, wherein said partial dewatering step comprising removing sufficient water from said mash to make a dough having approximately 20% to 50% water by weight.

6.      The process according to claim 1 and further comprising the step of adding starch.

7.      The process according to claim 1 wherein said step of treating said pieces comprises drying said pieces and grinding the dried pieces into flour.

8.      The peanut product according to the process of claims 1, 2, 3, 4, 5, 6 or 7.

9.        The peanut product made according to the method for processing skinned peanuts which have been partially preprocessed by saline soaking and rinsing, comprising the steps of:

cooking said partially preprocessed peanuts in heated water to make a mixture of water and pretreated peanuts;

grinding said mixture to form a mash;

partially dewatering said mash by removing water to make a nonrunny dough;

using in said cooking step the water removed from said mash during said partial dewatering step;

dividing said dough into pieces;

drying said pieces; and

grinding said dried pieces into flour.

10.       A peanut product comprising: water-soluble pieces of dried, divided, unreconstituted peanut dough prepared from ground, heat-treated, detanninized, skinned peanuts and having a shape-sustaining effective amount of water.

1/1

WATER AND
PRETREATED
PEANUTS

| GRINDER | ← STARCH |

~1

↓ MASH

TO COOKER

← WATER

| DEWATERING DEVICE | ~2 |
| PREDRYER | ~3 |

↓ DOUGH

| DIVIDER | ~4 |

← STARCH

| DRYER | ~5 |

↓

PRODUCT

FIG.1

## DOCUMENTS CONSIDERED TO BE RELEVANT

| Category | Citation of document with indication, where appropriate, of relevant passages | Relevant to claim |
|---|---|---|
| | US - A - 3 162 536 (E. KAUFMANN)<br>* Claim 1; column 1, line 14 - column 2, line 30 *<br><br>-- | 1,2,8, 10 |
| | GB - A - 1 180 686 (IMPERIAL TOBACCO CO. OF CANADA)<br>* Claims 1,3,6; examples 1,2 *<br><br>-- | 1,2,6, 8 |
| DA | FR - A - 2 203 596 (AKIHIRO MATSUNAGA)<br>* Claim 1; examples *<br>& US - A - 3 829 589<br><br>-- | 4 |
| DA | US - A - 3 901 983 (AKIHIRO MATSUNAGA)<br>* Claim 1 *<br><br>-- | 4 |
| A | US - A - 2 685 519 (H. MOORE) | |
| A | US - A - 1 754 266 (J. COX)<br><br>---- | |

CLASSIFICATION OF THE APPLICATION (Int. Cl.³)

A 23 L    1/36

TECHNICAL FIELDS SEARCHED (Int Cl.³)

A 23 L    1/36
          1/20
A 23 P    1/00

CATEGORY OF CITED DOCUMENTS

X: particularly relevant
A: technological background
O: non-written disclosure
P: intermediate document
T: theory or principle underlying the invention
E: conflicting application
D· document cited in the application
L citation for other reasons

& member of the same patent family corresponding document

The present search report has been drawn up for all claims

| Place of search | Date of completion of the search | Examiner |
|---|---|---|
| The Hague | 12-06-1981 | DESMEDT |

EPO Form 1503.1   06.78